# EUROPÄISCHE PATENTSCHRIFT

(11) **EP 1 109 086 B1**
(45) Veröffentlichungstag und Bekanntmachung des Hinweises auf die Patenterteilung: **30.06.2004**
(21) Anmeldenummer: 00125209.7
(22) Anmeldetag: 22.11.2000
(51) Int. Cl.: G05B 19/4097, G06F 17/50

(54) **Konstruktionssystem und Verfahren zum Konstruieren oder Entwerfen neuer Bauteile**
Construction system and method for the construction or design of new parts
Système et procédé pour la construction ou conception de nouvelles pièces

(30) Priorität: 10.12.1999 DE 19959617
(43) Veröffentlichungstag der Anmeldung: 20.06.2001
(73) Patentinhaber: Volkswagen Aktiengesellschaft, 38436 Wolfsburg (DE); CAxOpen Product development technology GmbH, 67657 Kaiserslautern (DE)
(72) Erfinder: Sartiono, Ridwan Dr., 38527 Meine (DE); Janocha, Andrzej T., 67661 Kaiserslautern (DE); Kellner, Peter Dr. Prof., 38444 Wolfsburg (DE)

(56) Entgegenhaltungen:
- EP-A- 0 319 232
- EP-A- 0 529 529
- EP-A- 0 558 006
- US-A- 5 339 247
- US-A- 5 646 862
- US-A- 5 732 204

## Beschreibung

Die Erfindung betrifft ein Konstruktionssystem zum Konstruieren oder Entwerfen neuer Bauteile einer Konstruktionseinheit mit mindestens einem CAx-System und mindestens einer Zentraldatenbank, die über eine Datenverbindung zum Austausch von Daten miteinander verbunden sind. Die Erfindung betrifft ebenso ein Verfahren zum Konstruieren oder Entwerfen neuer Bauteile einer Konstruktionseinheit.

CAx-Systeme sind beispielsweise als CAD-, CAE oder CAM-Systeme, die zum Konstruieren von Bauteilen als CAD/CAE/CAM-Modelle eingesetzt werden, aus der Praxis hinlänglich bekannt. Ebenso bekannt ist der Einsatz von Konstruktionssysteme, die sich aus mehreren CAx-Systemen und einer mit den CAx-Systemen verbundenen Zentraldatenbank zusammensetzen, da häufig innerhalb eines Unternehmens für die Planung einer Konstruktionseinheit mehrere CAx-Systeme für unterschiedliche Konstruktionsbereiche eingesetzt werden, die aber aufeinander abgestimmt sein müssen.

So kann im Bereich des Fahrzeugbaus mit einem Fahrzeug als Konstruktionseinheit etwa ein erstes CAD-System Y in der Karosserie-Konstruktion und ein zweites CAD-System X in der Aggregate- und Fahrwerk-Konstruktion eingesetzt werden. Wird dann ein Aggregate-Bauteil in dem CAD-System X konstruiert, so wird das Bauteil im Anschluß über das Standardformat STEP (Standard for the Exchange of Product Model Data: internationaler Standard für ein Produktdatenmodell nach ISO 10303) in das Format des CAD-Systems Y konvertiert und für die Kollisionsuntersuchung in einer Fahrzeugdatenbank gespeichert. Treten bei der Kollisionsuntersuchung Unstimmigkeiten auf, so müssen die Aggregate-Bauteile im CAD-System X entsprechend nachbearbeitet werden. Dieser Vorgang muss eventuell mehrmals wiederholt werden, bis sich in der Fahrzeugdatenbank ergibt, dass sich das neu konstruierte Bauteil einwandfrei zwischen die bereits vorhandenen Bauteile einfügt. Diese bestehenden Systeme und Verfahren sind somit mit einem großen Zeit- und Kostenaufwand verbunden.

Es ist ferner aus der EP-A2-0 558 006 ein Teamwork-CAD-System bekannt, auf welchem die Oberbegriffe der unabhängigen Ansprüche 1 und 10 basieren. Dieses Teamwork-CAD-System weist mehrere Datenverarbeitungseinheiten auf, die mit einer Zentraldatenbank verbunden sind. Wenn ein Konstrukteur ein bestimmtes Bauteil einer Konstruktionseinheit weiter entwickeln möchte, meldet seine Datenverarbeitungseinheit dieses Bauteil der Zentraldatenbank. Daraufhin überträgt die Zentraldatenbank an die Datenverarbeitungseinheit des Konstrukteurs die Bauteildaten des gewünschten Bauteils sowie weiterer an dieses angrenzende bzw. zu berücksichtigende Bauteile. Hierbei werden an die einzelnen Datenverarbeitungseinheiten immer die aktuellsten Bauteildaten aller jeweils relevanten Bauteile übertragen.

Die EP-A2-0 529 529 offenbart ein Konstruktionssystem und -verfahren für graphische Formen, bei dem zunächst ein bestimmter Bereich festgelegt wird, in dem eine neue graphische Form konstruiert werden soll, und dann für alle vorhandenen Objektgruppen bereits vorhandener graphischer Formen überprüft wird, ob die Objektgruppe zumindest teilweise in dem bestimmten Bereich liegt. Falls eine Überschneidung vorliegt, werden alle Objektdaten dieser Objektgruppe von der Zentraldatenbank an eine Anzeigeeinheit übertragen. Die Anzeigeeinheit überprüft dann, ob einzelne Objekte der übertragenen Objektgruppe wenigstens teilweise in dem zuvor bestimmten Bereich liegen, um dann nur solche Objekte auf der Anzeigeeinheit anzuzeigen.

Schließlich beschreibt das US-Patent Nr. 5,646,862 ein Fahrzeugdesignsystem, bei welchem der Datenaustausch zwischen den einzelnen Systemkomponenten in einem speziellen gemeinsamen Datenaustauschformat erfolgt, unabhängig davon, in welchem Datenformat die Daten in den einzelnen Systemkomponenten bearbeitet werden.

Der vorliegenden Erfindung liegt die Aufgabe zugrunde, ein Konstruktionssystem und ein Verfahren zur Verfügung zu stellen, die ein vereinfachtes, kostengünstiges und zeitsparendes Konstruieren oder Entwerfen neuer Bauteile einer Konstruktionseinheit ermöglichen.

Die Aufgabe wird erfindungsgemäß zum einen gelöst durch ein Konstruktionssystem mit den Merkmalen des Anspruchs 1 und zum anderen durch ein Verfahren mit den Merkmalen des Anspruchs 10.

Das erfindungsgemäße Konstruktionssystem und das erfindungsgemäße Verfahren erlauben eine interaktive Ermittlung aller fertig konstruierten Bauteile, die innerhalb eines definierten Bauraums eines zu konstruierenden Bauteils liegen. Die Ermittlung der relevanten Bauteile erfolgt in einer Zentraldatenbank. Die ermittelten Bauteile werden ausschnittsweise oder komplett von der Zentraldatenbank in das CAx-System übertragen, das von dem Anwender für die Konstruktion des neuen Bauteils verwendet wird. Die übertragenen Bauteile können dann in dem CAx-System als Bauraumumgebung zusammengefasst und dem Anwender zur Verfügung gestellt werden.

Mit dem erfindungsgemäßen Konstruktionssystem und dem erfindungsgemäßen Verfahren kann der Anwender ein Bauteil in seinem CAx-System von vornherein sauber und exakt konstruieren, da er die genaue räumliche Abgrenzung zu den bereits vorhandenen Bauteilen vor sich hat. Damit wird jegliche Notwendigkeit für nachträgliche Änderungen dieses Bauteils in der Zentraldatenbank vermieden. Es kann somit auch ein erheblicher Teil des Zeit- und Kostenaufwands der verwendeten Verfahren vermieden werden.

Sämtliche Daten zu den bereits vorhandenen Bauteilen können in der Zentraldatenbank selber gespeichert sein, so daß hier ein unmittelbarer Zugriff zu den Daten zur Verfügung steht. Die von einem CAx-System erzeugten und in der Zentraldatenbank gespeicherten Geometriedaten zu den bereits vorhandenen Bauteilen werden in dem systemintemen Datenformat des jeweiligen CAx-Systems beschrieben, so daß bei Einsatz unterschiedlicher CAx-Systeme verschiedene Datenformate verwendet werden. Außerdem wird die Konstruktion an einem CAx-System unabhängig von der aktuellen Einsatzbereitschaft der anderen CAx-Systeme. Ebenso können aber in der Zentraldatenbank auch lediglich Verwaltungsdaten zu den fertigen Bauteilen abgelegt sein.

Ein besonderer Vorteil der Erfindung liegt darin, daß zunächst nicht die ermittelten bestehenden Bauteile selber von der Zentraldatenbank an das CAx-System übertragen werden, sondern Bauraumumgebungs-Boxen, die die Bauräume der bestehenden Bauteile definieren und die an den Bauraum des neu zu konstruierenden Bauteils angrenzen oder sich mit diesem überschneiden. Die Bauraumumgebungs-Boxen werden dann als vereinfachte Bauraumumgebung zusammen mit dem Bauraum für das zu konstruierende Bauteil in dem CAx-System dargestellt. Aufgrund dieser Ansicht kann der Anwender dann die für ihn notwendigen Bauraumumgebungs-Boxen auswählen und diese eventuell auch noch so zurecht schneiden, daß nur die unmittelbare Umgebung des Bauraums oder gar nur der Umfang des Bauraums selber verbleibt. Erst zu diesen verbleibenden Bauraumumgebungs-Boxen, die zurück an die Zentraldatenbank übermittelt werden, stellt die Zentraldatenbank dann die entsprechenden Ausschnitte aus den bestehenden Bauteile zusammen und übermittelt sie an das für die Konstruktion eingesetzte CAx-System. Auf diese Weise reduziert sich die Rechenzeit für die Übertragung der ermittelten Bauteile, da nur die Geometrieelemente innerhalb der entsprechenden Ausschnitte aus den bestehenden Bauteilen in das für die Konstruktion eingesetzte CAx-System konvertiert und übertragen werden. Zusätzlich steht dem Anwender für die Konstruktion des Bauteils ein großer Ausschnitt der Anzeigefläche zur Verfügung, da nur die unmittelbare Umgebung des Bauteils dargestellt wird, und er sieht dennoch gleichzeitig alle relevanten bereits vorhandenen Elemente der Konstruktionseinheit.

In einer bevorzugten Ausgestaltung des erfindungsgemäßen Verfahrens kann die Bauraumumgebung beim Konstruieren des neuen Bauteils im CAx-System vom Anwender wahlweise aus- und eingeblendet werden. Auf diese Weise wird die Konstruktionsarbeit noch weiter erleichtert.

Vorteilhafterweise kann ein sich in Konstruktion befindliches, aber noch nicht fertiggestelltes Bauteil in dem CAx-System abgespeichert werden, wenn der Anwender seine Konstruktionsarbeit unterbrechen möchte. Zusätzlich ist es von Vorteil, wenn die Bauraumumgebung des Bauteils für die spätere Fortsetzung der Konstruktionsarbeit separat verwaltet und abgespeichert werden kann. Wenn der Anwender später seine Konstruktionsarbeit fortsetzen will und er sein Bauteil in sein CAx-System lädt, so kann die gespeicherte Bauraumumgebung automatisch geladen werden, ohne daß ein Neuanfordem einer Bauraumumgebung erforderlich wäre.

Ferner besteht vorteilhafterweise die Möglichkeit, die Bauraumumgebung mit neuen Daten aus der Zentraldatenbank zu aktualisieren. Auf diese Weise wird sichergestellt, daß die Konstruktion stets in der aktuell gültigen Bauraumumgebung erfolgen kann, da andere Teile im Laufe der Konstruktion hinzukommen können. Ebenso wird hierdurch berücksichtig, daß bestehende Teile weggefallen sein oder sich geändert haben können.

In einer bevorzugten Ausgestaltung des erfindungsgemäßen Verfahrens erfolgt die Darstellung in den CAx-Systemen in einem Bauraum-Koordinatensystem und die Verarbeitung in der Zentraldatenbank in einem Konstruktionseinheits-Koordinatensystem, das jeweils für eine Kontruktionseinheit, beispielsweise ein Fahrzeug, definiert ist. Auf diese Weise kann für die Konstruktion in den CAx-Systemen ein Koordinatensystem verwendet werden, das auf die Geometrie des zu konstruierenden Bauteils abgestimmt ist, während gleichzeitig eine Zusammenschau der einzelnen Bauteile in einem einheitlichen Koordinatensystem in der Zentraldatenbank ermöglicht wird. Die Transformation von dem Bauraum-Koordinatensystem in das Konstruktionseinheits-Koordinatensystem kann mittels Matrizen erfolgen, die für die Einbaulage in der Konstruktionseinheit bestimmt werden bzw. für bestehende Bauteile mit abgelegt sind. Ein Bauteil kann ein Einzelteil oder eine Baugruppe sein, die wiederum aus mehreren Bauteilen besteht. Jedes Bauteil besitzt eine Transformationsmatrix, um seine Einbaulage in der Baugruppe festzulegen.

Ist das Konstruktionssystem für die Konstruktion von Bauteilen einer Vielzahl verschiedener Konstruktionseinheiten vorgesehen, z.B. für die Bauteile unterschiedlicher Fahrzeuge, so besitzen diese Bauteile für jedes Fahrzeug die entsprechende Transformationsmatrix, um die Einbaulage dieser Bauteile in der jeweiligen Konstruktionseinheit dieses Fahrzeuges festzulegen.

Weitere vorteilhafte Ausgestaltungen des erfindungsgemäßen Konstruktionssystems und des erfindungsgemäßen Verfahrens gehen aus den Unteransprüchen hervor.

Ein Anwendungsgebiet, in dem das erfindungsgemäßen Konstruktionssystems und das erfindungsgemäßen Verfahrens von besonderem Vorteil sind, ist der Bereich der Fahrzeugkonstruktion. Ebenso vorteilhaft können sie aber auch bei der Konstruktion anderer komplexer Konstruktionseinheiten eingesetzt werden.

Unter CAx-System ist im Kontext der Erfindung jegliches rechnergestützte System zum Entwerfen, Entwickeln, Konstruieren oder Modellieren von Bauteilen zu verstehen, wobei ein Bauteil jegliches Element einer aus mehreren Elementen zusammengesetzten Einheit sein kann.

Das erfindungsgemäße Konstruktionssystem und das erfindungsgemäße Verfahren werden nun anhand von Ausführungsbeispielen und unter Bezugnahme auf Zeichnungen näher erläutert. Dabei zeigt
- Fig. 1: eine schematische Übersicht über ein Konstruktionssystem gemäß Erfindung,
- Fig. 2: ein Beispiel für ein zu konstruierendes Bauteil zusammen mit angrenzenden, bereits vorhandenen Bauteilen,
- Fig. 3: Bauraum und Bauraumumgebung zu dem zu konstruierenden Bauteil aus Fig. 2,
- Fig. 4: zu der Bauraumumgebung gehörende Ausschnitte der Bauteile entsprechend einer angepaßten Bauraumumgebung aus Fig. 3,
- Fig. 5: eine Ablagestruktur eines CAD-Systems eines Konstruktionssystems gemäß Erfindung,
- Fig. 6: eine Verwaltungstabelle im Rahmen der Ablagestruktur aus Fig. 5,
- Fig. 7a-b: ein Ablaufdiagramm zu dem Verfahren gemäß Erfindung und
- Fig 8: Zuordnung eines Bauteils zu einer Baugruppe und zu einem Fahrzeug über Transformationsmatrizen.

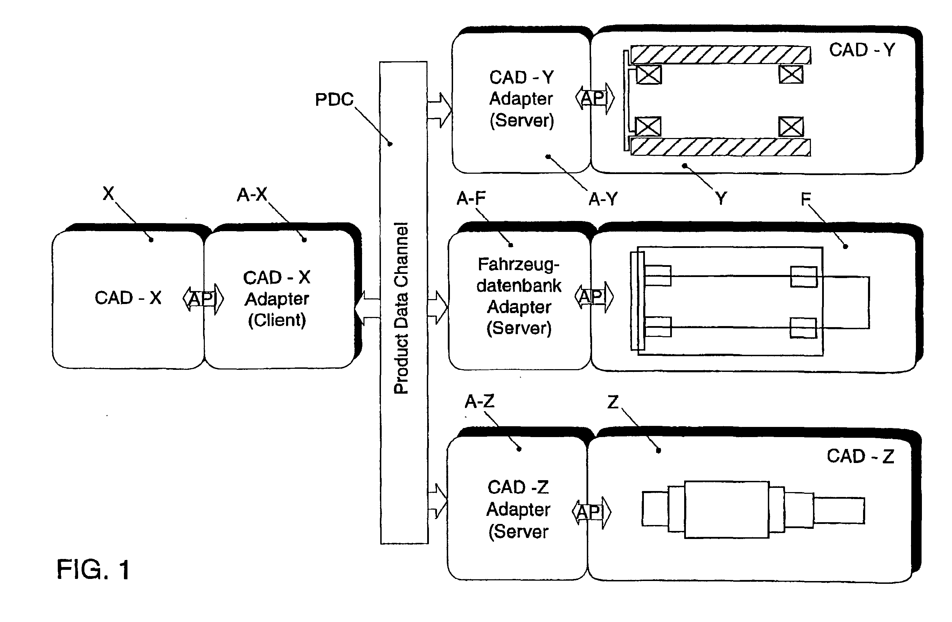

In Figur 1 ist eine Übersicht über ein erfindungsgemäßes Konstruktionssystem dargestellt, das in diesem Ausführungsbeispiel für die Konstruktion von Bauteilen verschiedener Fahrzeuge eingesetzt wird. Eine Fahrzeugdatenbank F als Zentraldatenbank sowie ein erstes CAD-System X, ein zweites CAD-System Y und ein drittes CAD-System Z sind jeweils über eine Apptikations-Programmierschnitt-stelle (application programming interface, API) und einen Adapter A-X, A-Y, A-Z, A-F mit einem Produkt-Datenkanal PDC verbunden. Mit dem Datenkanal können weitere, hier nicht dargestellte CAD-Systeme und Fahrzeugdatenbanken verbunden sein.

Jedes der drei CAD-Systeme X, Y, Z wird von Konstrukteuren für die Konstruktion der Bauteile eines bestimmten Bereichs von Fahrzeugen, wie Karosserie, Aggregate und Fahrwerk, eingesetzt. Die in einem Bauraum-Koordinaten-system definierten und von einem der CAD-Systeme X,Y,Z erstellten Bauteile werden zusammen mit ihrer Bauraum-Box im Bauraum-Koordinatensystem und einer Transformationsmatrix, die die jeweilige Lage der Bauteile in dem Fahrzeug-Koordinatensystem für das zugehörige Fahrzeug festlegt, in der Fahrzeugdatenbank F gespeichert.

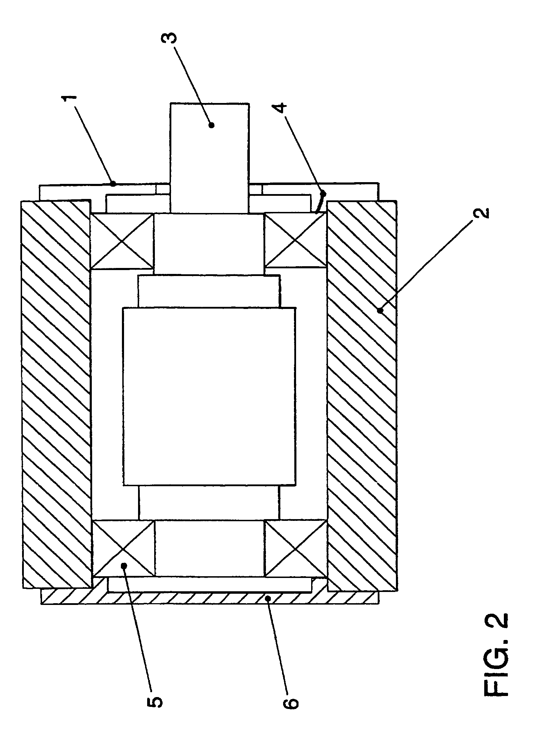

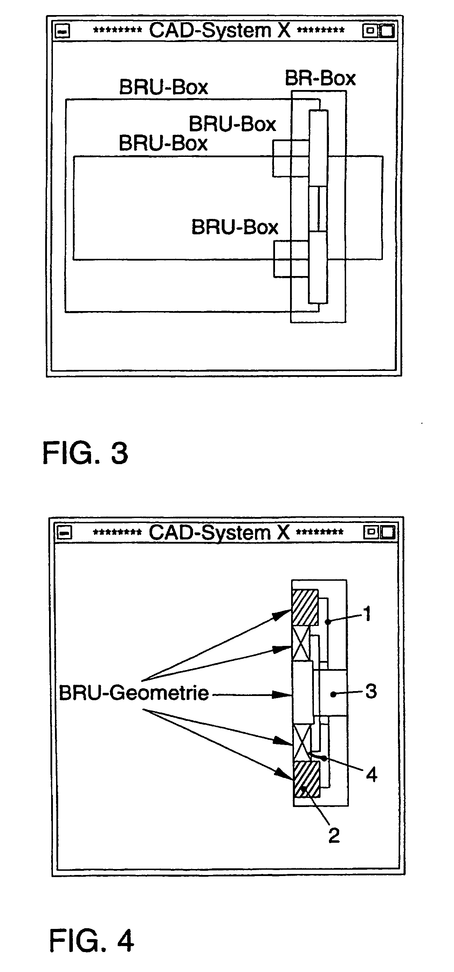

Will ein Konstrukteur nun beispielsweise im CAD-Systems X eine neue Abdeckung 1 für einen Zylinder 2, in dem eine Welle 3 gelagert ist, konstruieren, wie dies in Figur 2 dargestellte ist, so wählt er zunächst über die Eingabemittel des verwendeten CAD-Systems X die erforderliche Fahrzeugdatenbank F und das Fahrzeug, für das das Bauteil bestimmt ist, aus, falls mehr als eine Fahrzeugdatenbank existiert bzw. falls Daten für mehrere Fahrzeuge vorhanden sind. Des weiteren definiert er den in Figur 3 dargestellten Bauraum BR-Box, innerhalb dem die Abdeckung 1 konstruiert werden soll. Er fordert dann unter Übermittlung des Baumraums BR-Box von der Fahrzeugdatenbank F hierzu die Bauraumumgebung mit den bereits vorhandenen Bauteilen für das ausgewählte Fahrzeug an. Die Fahrzeugdatenbank F ermittelt daraufhin die Bauraumumgebungs-Boxen zu den bereits vorhandenen Bauteilen 2, 3, 4, 5, 6 des Fahrzeugs. Jede Bauraumumgebungs-Box BRU-Box stellt dabei den Bauraum eines der bereits vorhandenen Bauteile dar. Alle Bauraumumgebungs-Boxen BRU-Box, die an den Bauraum BR-Box des zu konstruierenden Bauteils angrenzen oder sich mit diesem überschneiden, werden an das CAD-System X übermittelt, in diesem Fall somit die Bauraumumgebungsboxen BRU-Box zu den Bauteilen 2, 3, 4. Im CAD-System X steht somit zunächst eine vereinfachte, aus Bauraumumgebungs-Boxen BRU-Box bestehende Bauraumumgebung zur Verfügung, die ebenfalls in Figur 3 zu sehen ist.

Der Konstrukteur kann nun bei Bedarf die Bauraumumgebung anpassen, d.h. einschränken auf den Bereich, den er für ein sinnvolles Bearbeiten benötigt. Dadurch reduziert sich die Rechenzeit für die spätere Übertragung der ermittelten Bauteile, da nur die Geometrieelemente innerhalb des eingeschränkten Bereiches von dem CAD-System Y bzw. Z in das CAD-System X konvertiert und übertragen werden. Außerdem steht dem Konstrukteur für das neu zu konstruierende Bauteil mehr Raum zur Verfügung als bei Beibehalten der gesamten Bauraumumgebung. Für die angepaßte vereinfachte Bauraumumgebung wird dann von der Fahrzeugdatenbank die exakte Bauraumumgebung angefordert, die aus auf die angepaßten Bauraumumgebung zugeschnittenen bereits vorhandenen Bauteilen besteht.

In dieser exakten Bauraumumgebung entsprechen Figur 4 kann das neue Bauteil 1 dann konstruiert werden. Hier wird deutlich, daß Zylinder 2, Lager 4 und Welle 3 dem Konstrukteur nur in dem Ausschnitt angezeigt werden, der für die Konstruktion der Abdeckung von Bedeutung ist.

Im Anschluß kann das neu konstruierte Bauteil 1 mit oder ohne Bauraumumgebung abgespeichert werden, was vor allem von Interesse ist, wenn die Konstruktion noch nicht abgeschlossen ist. Bei einer späteren Bearbeitung kann dann entweder die bereits gespeicherte Bauraumumgebung automatisch wieder geladen, oder aber eine neue Bauraumumgebung erzeugt werden.

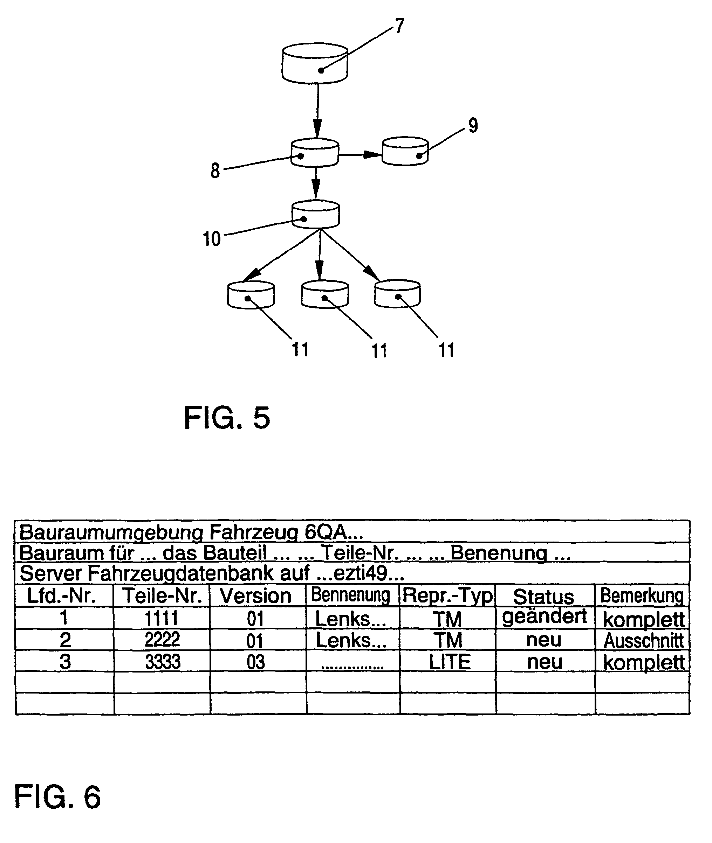

Die CAD-Systeme X,Y,Z weisen zum Ablegen der Daten für die Bauraumumgebung jeweils die in Figur 5 dargestellte Ablagestruktur auf:

In einer Bauteiledatei 7 werden die Daten für ein zu konstruierendes Bauteil abgelegt, zusammen mit einem Flag, das darauf hinweist, ob für das Bauteil eine Bauraumumgebung definiert und gespeichert wurde, und gegebenenfalls mit dem Namen der Ablagedatei für diese Bauraumumgebung.

In der so bestimmten Datei 8 für die Bauraumumgebung wird der Name der Fahrzeugdatenbank F und des Fahrzeugs, für das das Bauteil bestimmt ist, abgelegt. Des weiteren findet sich hier der Name der Datei 9 einer Verwaltungstabelle, die Daten des Bauraums beinhaltet, innerhalb dem das Bauteil konstruiert werden soll, und eine Liste mit Bauraumumgebungs-Boxen. Schließlich ist hier noch der Name der Datei 10 der Bauraum-Assembly abgelegt.

Ein Beispiel für eine Verwaltungstabelle ist in Figur 6 zu sehen. Hier werden alle Daten der Bauteile der Bauraumumgebung abgelegt, die für den Konstrukteur von Interesse sein können. So wird in der Verwaltungstabelle in Figur 6 für jedes Bauteil der Bauraumumgebung neben einer laufenden Nummer jeweils die Teilnummer, die Version, die Benennung, der Darstellungstyp Repr.-Typ, der Status und eine Bemerkung eingetragen. Der Darstellungstyp kann dabei zum einen die exakte Geometriebeschreibung TM, oder aber eine vereinfachte Geometriebeschreibung Lite des jeweiligen Bauteils sein. Der Status eines Bauteils gibt Auskunft darüber, ob es sich um ein neues oder ein geändertes Bauteil handelt. Als Bemerkung wird schließlich eingetragen, ob das jeweilige Bauteil in der gewählten Bauraumumgebung komplett oder lediglich ausschnittsweise dargestellt wird.

Die Bauraum-Assembly, deren Dateiname ebenso wie der Dateiname der Verwaltungstabelle in der Datei 8 für die Bauraumumgebung gespeichert wird, weist die Daten der verschiedenen Bauteile 11 der Bauraumumgebung, also die in der Verwaltungstabelle gelisteten Bauteile, in dem Format auf, welches das CAD-System, zu dem die Ablagestruktur gehört, für die Verarbeitung benötigt.

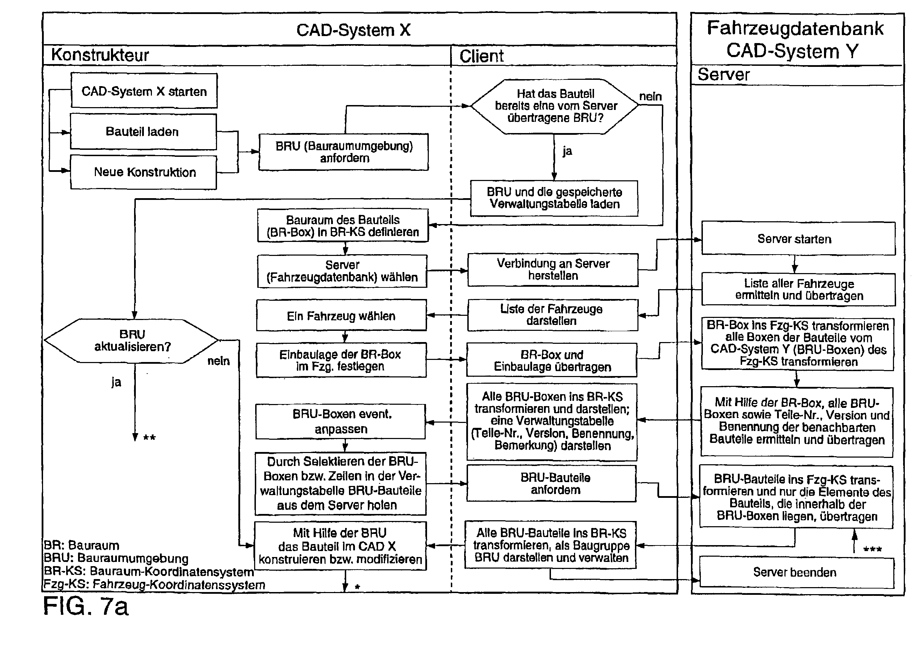

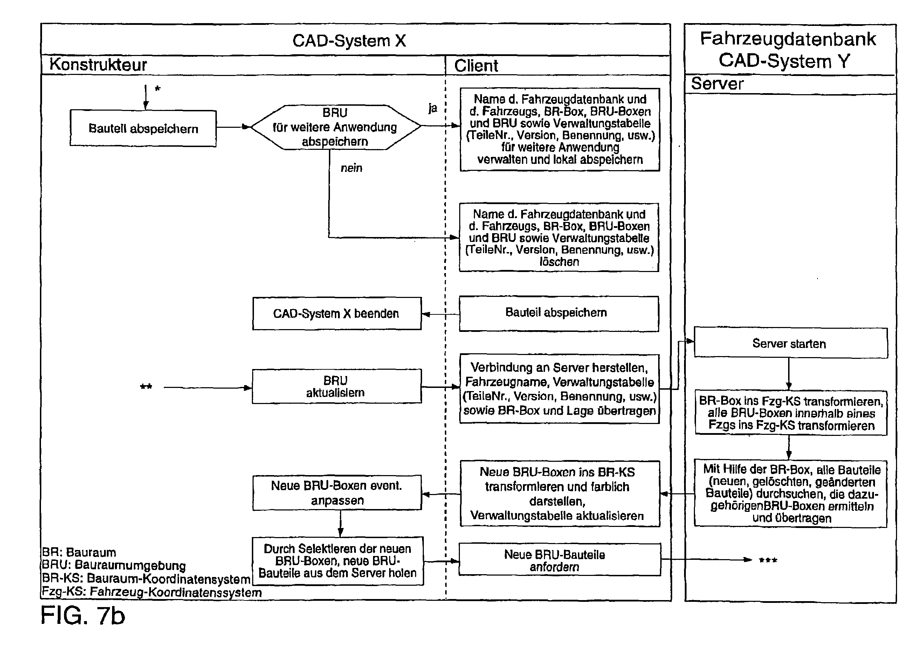

Das erfindungsgemäße Verfahren wird nun im einzelnen anhand des auf zwei Seiten verteiltes Ablaufdiagramms in den Figuren 7a und 7b erläutert. Die Verbindung zwischen Blöcken auf verschiedenen Seiten ist durch Sternchen ("*", "**" bzw. "***") kenntlich gemacht.

In dem Ablaufdiagramm sind in den Figuren 7a und 7b jeweils auf der linken Seite die Abläufe in einem CAD-System X dargestellt, das von einem Konstrukteur zur Konstruktion eines Bauteils verwendet wird. Jeweils auf der rechten Seite sind die Abläufe auf Server-Seite dargestellt. Es handelt sich somit um die Abläufe in der über einen Datenkanal mit dem CAD-System X verbundenen Fahrzeugdatenbank F, sowie um die Kommunikation zwischen der Fahrzeugdatenbank F, in der in diesem Fall alle relevanten Bauteile gespeichert sein sollen, und einem weiteren CAD-System Y. Die Abläufe im CAD-System X sind ihrerseits nochmals unterteilt in einen linken Bereich, in dem die Aktionen des Konstrukteurs veranschaulicht sind, und in einen rechten Bereich, in dem die Client-Rechner Funktionen des CAD-Systems X zum Ausdruck kommen.

Der Konstrukteur startet das CAD-System X und entscheidet, ob er eine neue Konstruktion beginnen will oder aber mit einem in der Konstruktion bereits begonnenen Bauteil fortfahren will und fordert eine Bauraumumgebung für das Bauteil an. Das CAD-System X überprüft daraufhin, ob für das Bauteil bereits eine Bauraumumgebung vorhanden ist. Zunächst wird nun das Verfahren für den Fall dargestellt, daß noch keine Bauraumumgebung für das neu zu konstruierende Bauteil abgespeichert ist.

Der Konstrukteur wird aufgefordert, für das Bauteil einen Bauraum BR-Box zu definieren, der festlegt, in welchem Bereich im Bauraum-Koordinatensystem BR-KS des CAD-Systems X das zu konstruierende Bauteil liegen soll. Des weiteren muß der Konstrukteur als Server die gewünschte Fahrzeugdatenbank F wählen, falls mehr als eine Fahrzeugdatenbank in Frage kommt. Das CAD-System X stellt dann eine Verbindung mit dem Server der Fahrzeugdatenbank F her, der gestartet wird, eine Liste mit allen zur Verfügung stehenden Fahrzeugen ermittelt und diese an das CAD-System X überträgt. Das CAD-System X präsentiert dem Konstrukteur eine Liste mit den Fahrzeugen, aus der dieser ein Fahrzeug auswählt. Der Konstrukteur legt ferner die Einbaulage des Bauraums BR-Box in diesem Fahrzeug fest, woraufhin sowohl die Dimensionen des Bauraums als auch dessen Einbaulage im Fahrzeug von dem CAD-System X an die Fahrzeugdatenbank F übermittelt werden.

In der Fahrzeugdatenbank wird zum einen der Bauraum des zu konstruierenden Bauteil und zum anderen der jeweilige Bauraum aller bereits gespeicherten Bauteile zu diesem Fahrzeug in das Fahrzeug-Koordinatensystem Fzg-KS transformiert. Daraus können in der Fahrzeugdatenbank F nun diejenigen Bauräume BRU-Box als Bauraumumgebung gewählt werden, die an den Bauraum BR-Box des zu konstruierenden Bauteils grenzen oder sich mit diesem überschneiden. Zu diesen ausgewählten Bauraumumgebungs-Boxen BRU-Box werden Teilenummer, Version und Benennung der zugehörigen Bauteile ermittelt und zusammen mit den Bauraumumgebungs-Boxen an das CAD-System X übertragen.

In dem CAD-System X werden alle Bauraumumgebungs-Boxen BRU-Box in das Bauraum-Koordinatensystem BR-KS transformiert und als vereinfachte Bauraumumgebung dargestellt, ähnlich wie dies bereits in Figur 2 zu sehen war. Außerdem wird eine Verwaltungstabelle mit Teilenummer, Version und Benennung der zu den Bauraumumgebungs-Boxen gehörenden Bauteile und einer Bemerkung entsprechend der Tabelle in Figur 6 dargestellt.

Falls gewünscht, kann der Konstrukteur aus den angezeigten Bauraumumgebungs-Boxen BRU-Box bestimmte Boxen selektieren und/oder anpassen. Die Selektion gewünschter Bauraumumgebungs-Boxen BRU-Box erfolgt dabei durch Auswahl in der Darstellung der Bauraumumgebung oder durch Anwahl der entsprechenden Zeilen in der angezeigten Verwaltungstabelle.

Über den Client kann jetzt die geometrische Darstellung der Bauteile der zugeschnittenen Bauraumumgebung angefordert werden. Hierzu werden aus der Fahrzeugdatenbank F alle Bauteile der selektierten Bauraumumgebungs-Boxen in das CAD-System Y geladen und in das Fahrzeugkoordinatensystem Fzg-KS transformiert. Nur die Element der jeweiligen Bauteile, die innerhalb der zugeschnittenen Bauraumumgebungs-Boxen liegen, werden an das CAD-System X übertragen.

Sobald alle zugeschnittenen Bauteile der Bauraumumgebung im CAD-System X in das Bauraum-Koordinatensystem BR-KS transformiert, als Baugruppe dargestellt und verwaltet sind, kann der Server beendet werden. Der Konstrukteur, auf der anderen Seite, kann nun mit Hilfe der exakten Bauraumumgebung ähnlich der in Figur 4 dargestellten das neue Bauteil konstruieren. Während der Konstruktion oder Modifikation eines neuen Bauteils kann der Konstrukteur die Bauraumumgebung nach Belieben ein- und ausblenden. Im Rahmen eines anschließenden Abspeichems des Bauteils (Übergang *) muß er sich entscheiden, ob die definierte Bauraumumgebung für weitere Anwendungen ebenfalls abgespeichert werden soll. Falls ja, werden der Name der Fahrzeugdatenbank und des Fahrzeugs, der Bauraum BR-Box und die Bauraumumgebung mit den dazu gehörigen einzelnen Bauraumumgebungs-Boxen BRU-Box sowie die Verwaltungstabelle für weitere Anwendungen verwaltet und lokal abgespeichert. Anderenfalls werden vom CAD-System X der Name der Fahrzeugdatenbank und des Fahrzeugtyps, der Bauraum BR-Box, die Bauraumumgebung und die Verwaltungstabelle gelöscht. In beiden Fällen werden die Daten zum Bauteil selber abgespeichert und der Konstrukteur kann das CAD-System X beenden.

War beim Starten des CAD-Systems X bereits eine Bauraumumgebung für das neu zu konstruierende Bauteil vorhanden, so werden anstelle der soeben beschriebenen Schritte die Bauraumumgebung und die hierzu gespeicherte Verwaltungstabelle vom CAD-System X geladen und angezeigt. Soll die Bauraumumgebung ohne Aktualisierung wie angezeigt weiter verwendet werden, so kann der Konstrukteur direkt mit der Modifikation des Bauteils fortfahren, an die sich die oben beschriebenen Schritte zum Speichern des Bauteils anschließen (Übergang *). Eine Kommunikation mit der Fahrzeugdatenbank F ist in diesem Fall nicht erforderlich.

Wünscht der Konstrukteur dagegen eine Aktualisierung der Bauraumumgebung (Übergang **), so stellt das CAD-System X eine Verbindung mit der entsprechenden Fahrzeugdatenbank F her und überträgt an diese den Fahrzeugnamen, den Inhalt der Verwaltungstabelle, die Daten zum Bauraum BR-Box und dessen Lage. Der Server startet daraufhin und transformiert den Bauraum BR-Box und die Bauräume zu allen im CAD-System Y bereits vorhandenen Bauteilen als Bauraumumgebungs-Boxen BRU-Box in das Fahrzeug-Koordinatensystem Fzg-KS. Mit Hilfe des Bauraums BR-Box werden alle bestehenden Bauteile auf neue, gelöschte oder geänderte Bauteile hin durchsucht und die dazu gehörigen Bauraumumgebungs-Boxen ermittelt und an das CAD-System X übertragen.

Das CAD-System X transformiert die neuen Bauraumumgebungs-Boxen in das Bauraum-Koordinatensystem BR-KS und stellt sie farblich abgesetzt dar. Das CAD-System X aktualisiert zudem die Verwaltungstabelle. Der Konstrukteur hat nun wiederum die Möglichkeit die neuen Bauraumumgebung eventuell anzupassen und durch Selektieren der neuen Bauraumumgebungs-Boxen die neuen Bauteile über das CAD-System X bei der Fahrzeugdatenbank F anzufordern (Übergang ***). Es folgt im Fahrzeugdatenbank F die Transformation der Bauteile ins Fahrzeug-Koordinatensystem Fzg-KS und die Übertragung der Elemente der vom CAD-System Y erhaltenen Bauteile, die innerhalb der angepaßten Bauraumumgebungs-Boxen liegen, an das CAD-System X, wie dies bereits zu der Neuschaffung einer Bauraumumgebung ausgeführt worden war. Auch die weiteren Schritte entsprechen ab diesem Punkt dem Verfahren bei einer neu angelegten Bauraumumgebung.

Die Transformation der Bauteile ins Fahrzeug-Koordinatensystem Fzg-KS erfolgt anhand von Transformationsmatrizen. Die Transformationsmatrizen beinhalten Informationen über eine Translation in x-, y- und z-Richtung sowie über eine Rotation um die x-, y- und z- Achse und sind in der Fahrzeugdatenbank F für jedes der bereits konstruierten Bauteile mit abgespeichert.

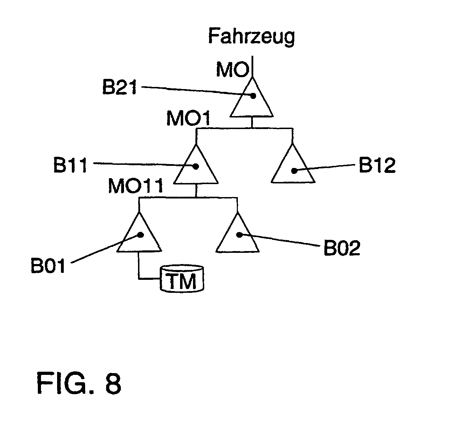

Ein Bauteil ist entweder ein Einzelteil oder eine Baugruppe, die wiederum aus mehreren Bauteilen besteht, wobei jedes Bauteil einen eigenen Bauraum BR-Box, BRU-Box besitzt. Die Zuordnung eines Bauteils zu einer Baugruppe erfolgt ebenfalls über Transformationsmatrizen und geht aus der Struktur in Figur 8 hervor, in der das Bauteil B01 zu der Baugruppe B11 gehört, die wiederum einen Teil der Baugruppe B21 bildet.

Das Bauteil B01 aus Figur 8, dessen Bauraum BR-Box im Bauraum-Koordinatensystem BR-KS definiert ist, soll mit seinen exakten Geometriedaten TM im CAD-System X neu konstruiert werden. Die Einbaulage des Bauteils B01 ist in der Baugruppe B11 durch die Transformationsmatrix M011 festgelegt. Die Einbaulage der Baugruppe B11 in der übergeordneten Baugruppe B21 ist ihrerseits durch die Transformationsmatrix M01 festgelegt. Die endgültige Einbaulage der Baugruppe B21 in dem Fahrzeug wird durch die Transformationsmatrix M0 beschrieben.

In der Fahrzeugdatenbank F sind die Geometriedaten zu den bereits erstellten Einzelteilen in dem jeweiligen CAx-systeminternen Format und in dem Bauraum-Koordinatensystem BR-KS, in dem sie erstellt wurden, sowohl in exakter als auch in vereinfachter Darstellung TM und Lite gespeichert. Analog zu der Darstellung in Figur 8 ist dabei die jeweilige Lage der einzelnen Bauteile in den übergeordneten Baugruppen und die jeweilige Lage der umfassendsten Baugruppen in dem Fahrzeug über Transformationsmatrizen festgelegt.

Für die Ermittlung der Bauraumumgebung für das neu zu konstruierenden Bauteil B01 müssen die Bauräume BRU-Box der bereits erstellten Bauteile bestimmt werden, die sich mit dem Bauraum BR-Box des zu konstruierenden Bauteils B01 überschneiden bzw. die an diesen angrenzen.

Zu diesem Zweck wird zum einen der Bauraum BR-Box des Bauteils B01 mittels der Transformationsmatrizen M011, M01 und M0 vom Bauraum-Koordinatensystem BR-KS ins Fahrzeug-Koordinatensystem Fzg-KS transformiert und anschließend in die Fahrzeugdatenbank F übertragen. Zum anderen müssen auch die einzelnen Bauräume der bestehenden Bauteile durch die entsprechenden Transformationsmatrizen von dem jeweiligen Bauraum-Koordinatensystem BR-KS in das Fahrzeug-Koordinatensystem Fzg-KS transformiert werden.

Als Folge stehen dann in der Fahrzeugdatenbank sowohl der Bauraum BR-Box des neu zu konstruierenden Bauteils als auch die Bauräume der bestehenden Bauteile im Fahrzeug-Koordinatensystem Fzg-KS zur Verfügung, so daß die Ermittlung der Bauraumumgebung für das neu zu konstruierenden Bauteil ohne weiteres erfolgen kann.

## Patentansprüche

1. Konstruktionssystem zum Konstruieren oder Entwerfen neuer Bauteile einer Konstruktionseinheit im Kontext einer aus bereits vorhandenen Bauteilen der Konstruktionseinheit bestehenden Bauraumumgebung, mit
mindestens einem CAx-System (X, Y, Z), das Eingabemittel zum Konstruieren eines Bauteils und Anzeigemittel zum Anzeigen des Bauraums (BR-Box) des zu konstruierenden Bauteils, der Bauraumumgebung und von Bauteilen umfasst; und
mindestens einer Zentraldatenbank (F), die über eine Datenverbindung (PDC) zum Austausch von Daten mit dem mindestens einen CAx-System (X, Y, Z) verbunden ist, über einen Zugriff auf die bereits vorhandenen Bauteile mindestens einer Konstruktionseinheit verfügt, und Selektionsmittel zum Auswählen derjenigen bereits vorhandenen Bauteile der Konstruktionseinheit, die oder deren Bauräume (BRU-Box) sich mit dem Bauraum (BR-Box) des zu konstruierenden Bauteils überschneiden oder an diesen angrenzen, sowie Übertragungsmittel zum Übertragen der selektierten bereits vorhandenen Bauteile zusammen mit ihre relative Lage zu dem Bauraum (BR-Box) des neu zu konstruierenden Bauteils definierenden Informationen als Bauraumumgebung an das CAx-System (X, Y, Z) aufweist,
**dadurch gekennzeichnet,**
**dass** die Übertragungsmittel der Zentraldatenbank (F) ferner zum Übertragen der Bauräume (BRU-Box) der bereits vorhandenen Bauteile an das CAx-System (X, Y, Z) und zum ausschnittsweisen oder kompletten Übertragen der selektierten bereits vorhandenen Bauteile ausgebildet sind; und
**dass** das mindestens eine CAx-System (X, Y, Z) ferner Eingabemittel zum Festlegen des Bauraums (BR-Box) für das zu konstruierende Bauteil, Selektionsmittel zur Selektion und/oder Größenanpassung der von der Zentraldatenbank (F) übermittelten Bauräume (BRU-Box) der bereits vorhandenen Bauteile, Übertragungsmittel zum Übertragen des festgelegten Bauraums (BR-Box) und der selektierten und/oder in ihrer Größe angepassten Bauräume (BRU-Box) der bereits vorhandenen Bauteile an die Zentraldatenbank (F), und Anzeigemittel zum ausschnittsweisen oder kompletten Anzeigen der selektierten bereits vorhandenen Bauteile aufweist.

2. Konstruktionssystem nach Anspruch 1, **dadurch gekennzeichnet, daß** die Zentraldatenbank (F) Speichermittel für ein fertiges mit dem CAx-System (X,Y,Z) konstruiertes Bauteil zusammen mit seiner Bauraum-Box und seiner Einbauanlage aufweist.

3. Konstruktionssystem nach einem der voranstehenden Ansprüche, **dadurch gekennzeichnet, daß** das CAx-System (X) Speichermittel zum Abspeichem einer Bauraumumgebung für ein zu konstruierendes Bauteil aufweist.

4. Konstruktionssystem nach einem der voranstehenden Ansprüche, **dadurch gekennzeichnet, daß** das CAx-System (X) Speichermittel zum Speichern von Verwaltungsdaten zu den Bauteilen der Bauraumumgebung aufweist, die dem Anwender, insbesondere in Form einer Verwaltungstabelle, zur Verfügung stellbar sind, wobei die Verwaltungsdaten insbesondere eine laufende Nummer, eine Teilnummer, eine Versionsnummer, eine Benennung, einen Status "neu" oder "geändert" sowie eine Bemerkung für jedes Bauteil der Bauraumumgebung umfassen können.

5. Konstruktionssystem nach einem der voranstehenden Ansprüche, **dadurch gekennzeichnet, daß** das CAx-System (X) eine Ablagestruktur für die einem Bauteil zugeordneten Bauraumumgebungsdaten aufweist, wobei einer Datei (7) mit den Daten des zu konstruierenden Bauteils ein Bauraumumgebungs-Flag zum Anzeigen, ob zu dem Bauteil eine Bauraumumgebung gespeichert ist, und der Name einer Bauraumumgebungs-Ablagedatei (8) zugeordnet sind, wobei die Bauraumumgebungs-Ablagedatei (8) den Namen einer Datei (10) mit einer Verwaltungstabelle, die Verwaltungsdaten zu den Bauteilen der Bauraumumgebung enthält, die Definition des Bauraums des zu konstruierenden Bauteils, eine Liste der Bauräumen (BRU-Box) der Bauteile der Bauraumumgebung sowie den Namen der Datei (11) einer Bauraumumgebungs-Assembly aufweist, und wobei die Bauraumumgebungs-Assembly ihrerseits die Daten der Bauteile der Bauraumumgebung in dem von dem CAx-System (X) verwendeten Format beinhaltet.

6. Konstruktionssystem nach einem der voranstehenden Ansprüche, **gekennzeichnet durch** eine Mehrzahl von CAx-Systemen (X,Y,Z), die mit der mindestens einen Zentraldatenbank (F) über eine Datenverbindung (PDC) verbunden sind.

7. Konstruktionssystem nach einem der voranstehenden Ansprüche, **gekennzeichnet durch** eine Mehrzahl von Zentraldatenbanken, die mit dem mindestens einen CAx-System (X,Y,Z) über eine Datenverbindung (PDC) verbunden sind, wobei über das für ein zu konstruierendes Bauteil eingesetzte CAx-System (X,Y,Z) eine bestimmte Zentraldatenbank (F) auswählbar ist.

8. Konstruktionssystem nach einem der voranstehenden Ansprüche, **dadurch gekennzeichnet, daß** die Datenverbindung zwischen dem mindestens einen CAx-System (X,Y,Z) und der mindestens einen Zentraldatenbank (F) über einen Produktdatenkanal (PDC) erfolgt, der jeweils über einen Adapter (A-X,A-Y,A-Z,A-F) und eine Applikations-Programmierschnittstelle (API) mit dem CAx-System (X,Y,Z) und der Zentraldatenbank (F) verbunden ist.

9. Konstruktionssystem nach einem der voranstehenden Ansprüche, **dadurch gekennzeichnet, daß** die Konstruktionseinheiten Kraftfahrzeuge sind.

10. Verfahren zum Konstruieren oder Entwerfen neuer Bauteile einer Konstruktionseinheit im Kontext einer aus bereits vorhandenen Bauteilen der Konstruktionseinheit bestehenden Bauraumumgebung mittels eines Konstruktionssystems mit mindestens einem CAx-System (X, Y, Z) und mindestens einer Zentraldatenbank (F), die über eine Datenverbindung (PDC) miteinander verbunden sind, bei welchem
durch die Zentraldatenbank (F) bereits vorhandene Bauteile der Konstruktionseinheit, die oder deren Bauräume (BRU-Box) an den Bauraum (BR-Box) des zu konstruierenden Bauteils angrenzen oder sich mit diesem überschneiden, ermittelt und zusammen mit ihre relative Lage zu dem Bauraum des zu konstruierenden Bauteils definierenden Informationen an das CAx-System X, Y, Z) übertragen werden; und
in dem CAx-System (X, Y, Z) die ermittelten bereits vorhandenen Bauteile in korrekter relativer Lage zu dem Bauraum (BR-Box) des zu konstruierenden Bauteils als Bauraumumgebung für die Konstruktion des in dem Bauraum (BR-Box) zu konstruierenden Bauteils angezeigt werden,
**dadurch gekennzeichnet,**
**dass** zunächst in dem CAx-System (X, Y, Z) durch einen Anwender der Bauraum (BR-Box) für das zu konstruierende Bauteil festgelegt und an die Zentraldatenbank (F) übertragen wird;
**dass** dann in der Zentraldatenbank (F) die Bauräume (BRU-Box) der bereits vorhandenen Bauteile, die an den festgelegten Bauraum (BR-Box) des zu konstruierenden Bauteils angrenzen oder sich mit diesem überschneiden, ermittelt und an das CAx-System übertragen werden;
**dass** anschließend von einem Anwender in dem CAx-System (X, Y, Z) selektierte und/oder in ihrer Größe angepasste Bauräume (BRU-Box) bereits vorhandener Bauteile an die Zentraldatenbank (F) zurück übertragen werden; und
**dass** erst dann die zu den selektierten Bauräumen (BRU-Box) gehörenden Bauteile entsprechend der Größenanpassung ausschnittsweise oder komplett von der Zentraldatenbank (F) an das CAx-System (X, Y, Z) übertragen werden.

11. Verfahren nach Anspruch 10, **dadurch gekennzeichnet, daß** die Bauraumumgebung während der Konstruktion des neu zu konstruierenden Bauteils Eingaben des Anwenders entsprechend ein- oder ausgeblendet werden kann.

12. Verfahren nach Anspruch 10 oder 11, **dadurch gekennzeichnet, daß** die Bauraumumgebung für ein sich in Konstruktion befindliches Bauteil mit abgespeichert werden kann.

13. Verfahren nach einem der Ansprüche 10 bis 12, **dadurch gekennzeichnet, daß** die Bauraumumgebung im Laufe der Konstruktion des neu zu konstruierenden Bauteils aktualisiert werden kann.

14. Verfahren nach Anspruch 13, **dadurch gekennzeichnet, daß** bei einer Aktualisierung der Bauraumumgebung nur geänderte Teile neu von der Zentraldatenbank (F) an das anfordernde CAx-System (X,Y,Z) übertragen und aktualisiert werden.

15. Verfahren nach einem der Ansprüche 10 bis 14, **dadurch gekennzeichnet, daß** die Zentraldatenbank (F) Zugriff zu den Bauteilen verschiedener Fahrzeuge hat und daß für die Konstruktion eines neuen Bauteils die Bauraumumgebung für ein bestimmtes Fahrzeug angefordert werden kann.

16. Verfahren nach einem der Ansprüche 10 bis 15, **dadurch gekennzeichnet, daß** die Darstellung des Bauraums und der Bauraumumgebung in dem für die Konstruktion eingesetzten CAx-System (X,Y,Z) in einem Bauraum-Koordinatensystem erfolgt und die Ermittlung der relevanten Bauteile oder der Bauräume relevanter Bauteile (BRU-Box) in der Zentraldatenbank (F) in einem Konstruktionseinheits-Koordinatensystem erfolgt, wobei von einem CAx-System (X,Y,Z) an die Zentraldatenbank (F) übermittelte Bauräume (BR-Box,BRU-Box) für die Ermittlung relevanter bestehender Bauteile von dem Bauraum-Koordinatensystem in das Konstruktionseinheits-Koordinatensystem transformiert werden und die Bauteile oder Bauraumumgebungs-Boxen, die von der Zentraldatenbank (F) an ein CAx-System (X,Y,Z) übertragen werden, aus dem Konstruktionseinheits-Koordinatensystem in das Bauraum-Koordinatensystem transformiert werden.

17. Verfahren nach einem der Ansprüche 10 bis 16, **dadurch gekennzeichnet, daß** in dem CAx-System (X,Y,Z), mit dem das neue Bauteil konstruiert werden soll, ein Konvertieren der empfangenen Daten der Bauraumumgebung in das von diesem CAx-System (X,Y,Z) eingesetzte Format erfolgt, wenn die bestehenden Bauteile der Bauraumumgebung in einem anderen Format erhalten wurden.

18. Verfahren nach einem der Ansprüche 10 bis 17, **dadurch gekennzeichnet, daß** das CAx-System (X,Y,Z) Daten zur Verwaltung der Bauteile der Bauraumumgebung, wie Teilenummer, Versionsnummer und Benennung, zwischenspeichert und dem Anwender zur Verfügung stellt.

19. Verfahren nach einem der Ansprüche 10 bis 18, **dadurch gekennzeichnet, daß** bei mehreren Zentraldatenbanken eine vom Anwender gewählte Zentraldatenbank (F) für die Ermittlung der Bauraumumgebung eingesetzt wird.

20. Verfahren nach einem der Ansprüche 10 bis 19, **dadurch gekennzeichnet, daß** das fertig konstruierte Bauteil der Zentraldatenbank (F) zur Verfügung gestellt wird als möglicher Bestandteil von in der Folge angeforderten Bauraumumgebungen.

## Claims

1. Design system for the design of new components of a design unit in the context of a design-space environment comprising pre-existing components of the design unit, with
at least one CAx system (X, Y, Z), which comprises input means for designing a component and display means for displaying the design space (BR box) of the component to be designed, the design-space environment and components; and
at least one central database (F), which is connected to the at least one CAx system (X, Y, Z) via a data connection (PDC) for the exchange of data, has access to the pre-existing components of at least one design unit, and has selection means for selecting those pre-existing components of the design unit which, or the design spaces (BRU box) of which, overlap with or are adjacent to the design space (BR box) of the component to be designed, and also transmission means for transmitting to the CAx system (X, Y, Z) the selected pre-existing components together with information defining their relative position with respect to the design space (BR box) of the component to be newly designed, as a design-space environment,
**characterized**
**in that** the transmission means of the central database (F) are also designed for transmitting to the CAx system (X, Y, Z) the design spaces (BRU box) of the pre-existing components and for partially or completely transmitting the selected pre-existing components; and
**in that** the at least one CAx system (X, Y, Z) also has input means for defining the design space (BR box) for the component to be designed, selection means for selecting and/or adapting the size of the design spaces (BRU box) of the pre-existing components transmitted from the central database (F), transmission means for transmitting to the central database (F) the defined design space (BR box) and the selected and/or size-adapted design spaces (BRU box) of the pre-existing components, and display means for partially or completely displaying the selected pre-existing components.

2. Design system according to Claim 1, **characterized in that** the central database (F) has storage means for a finished component designed by the CAx system (X, Y, Z), together with its design space box and its installation position.

3. Design system according to one of the preceding claims, **characterized in that** the CAx system (X) has storage means for storing a design-space environment for a component to be designed.

4. Design system according to one of the preceding claims, **characterized in that** the CAx system (X) has storage means for storing management data relating to the components of the design-space environment, which can be made available to the user, in particular in the form of a management table, it being possible for the management data to comprise in particular a consecutive number, a part number, a version number, a designation, a "new" or "modified" status and also a note for each component of the design-space environment.

5. Design system according to one of the preceding claims, **characterized in that** the CAx system (X) has a storing structure for the design-space environment data assigned to a component, a file (7) with the data of the component to be designed being assigned a design-space environment flag, for indicating whether a design-space environment is stored in relation to the component, and the name of a design-space environment storing file (8), the design-space environment storing file (8) having the name of a file (10) with a management table, which contains management data relating to the components of the design-space environment, the definition of the design space of the component to be designed, a list of the design spaces (BRU box) of the components of the design-space environment and also the name of the file (11) of a design-space environment assembly, and the design-space environment assembly for its part comprising the data of the components of the design-space environment in the format used by the CAx system (X).

6. Design system according to one of the preceding claims, **characterized by** a plurality of CAx systems (X, Y, Z), which are connected to the at least one central database (F) via a data connection (PDC).

7. Design system according to one of the preceding claims, **characterized by** a plurality of central databases, which are connected to the at least one CAx system (X, Y, Z) via a data connection (PDC), a specific central database (F) being selectable via the CAx system (X, Y, Z) used for a component to be designed.

8. Design system according to one of the preceding claims, **characterized in that** the data connection between the at least one CAx system (X, Y, Z) and the at least one central database (F) takes place via a product data channel (PDC), which is respectively connected to the CAx system (X, Y, Z) and the central database (F) via an adapter (A-X,A-Y,A-Z,A-F) and an application program interface (API).

9. Design system according to one of the preceding claims, **characterized in that** the design units are motor vehicles.

10. Method for the design of new components of a design unit in the context of a design-space environment comprising pre-existing components of the design unit by means of a design system with at least one CAx system (X, Y, Z) and at least one central database (F), which are connected to one another via a data connection (PDC), in which method
pre-existing components of the design unit which, or the design spaces (BRU box) of which, are adjacent to or overlap with the design space (BR box) of the component to be designed are determined by the central database (F) and transmitted to the CAx system (X, Y, Z) together with information defining their relative position with respect to the design space of the component to be designed; and
in the CAx system (X, Y, Z), the pre-existing components determined are displayed in their correct relative position with respect to the design space (BR box) of the component to be designed, as a design-space environment for the design of the component to be designed in the design space (BR box),
**characterized**
**in that** firstly the design space (BR box) for the component to be designed is defined by a user in the CAx system (X, Y, Z) and transmitted to the central database (F);
**in that** then, in the central database (F), the design spaces (BRU box) of the pre-existing components which are adjacent to or overlap with the defined design space (BR box) of the component to be designed are determined and transmitted to the CAx system;
**in that** subsequently design spaces (BRU box) of pre-existing components selected and/or adapted in their size by a user in the CAx system (X, Y, Z) are transmitted back to the central database (F); and
**in that** only then are the components that belong to the selected design spaces (BRU box) transmitted partially or completely, in accordance with the size adaptation, from the central database (F) to the CAx system (X, Y, Z).

11. Method according to Claim 10, **characterized in that** the design-space environment can be faded in or out, in accordance with inputs of the user, during the design of the component to be newly designed.

12. Method according to Claim 10 or 11, **characterized in that** the design-space environment for a component in the process of being designed can be stored.

13. Method according to one of Claims 10 to 12, **characterized in that** the design-space environment can be updated in the course of the design of the component to be newly designed.

14. Method according to Claim 13, **characterized in that** only modified parts are newly transmitted from the central database (F) to the requesting CAx system (X, Y, Z) and updated during updating of the design-space environment.

15. Method according to one of Claims 10 to 14, **characterized in that** the central database (F) has access to the components of various vehicles and **in that** the design-space environment for a specific vehicle can be requested for the design of a new component.

16. Method according to one of Claims 10 to 15, **characterized in that** the representation of the design space and of the design-space environment in the CAx system (X, Y, Z) used for the design takes place in a design-space coordinate system and the determination of the relevant components or of the design spaces of relevant components (BRU box) in the central database (F) takes place in a design-unit coordinate system, design spaces (BR box, BRU box) transmitted from a CAx system (X, Y, Z) to the central database (F) for the determination of relevant existing components being transformed from the design-space coordinate system into the design-unit coordinate system, and the components or design-space environment boxes that are transmitted from the central database (F) to a CAx system (X, Y, Z) being transformed from the design-unit coordinate system into the design-space coordinate system.

17. Method according to one of Claims 10 to 16, **characterized in that**, in the CAx system (X, Y, Z) with which the new component is to be designed, a conversion of the received data of the design-space environment into the format used by this CAx system (X, Y, Z) takes place if the existing components of the design-space environment were received in a different format.

18. Method according to one of Claims 10 to 17, **characterized in that** the CAx system (X, Y, Z) buffer-stores and makes available to the user data for managing the components of the design-space environment, such as a part number, version number and designation.

19. Method according to one of Claims 10 to 18, **characterized in that**, if there are a number of central databases, a central database (F) chosen by the user is used for the determination of the design-space environment.

20. Method according to one of Claims 10 to 19, **characterized in that**, once its design has been finished, the component is made available to the central database (F) as a possible constituent of design-space environments subsequently requested.

## Revendications

1. Système de conception pour la conception ou le développement de nouvelles pièces d'une unité de conception dans le contexte d'un environnement d'espace de montage composé de pièces existantes de l'unité de conception, comprenant au moins un système de xAO (X, Y, Z), lequel englobe des moyens d'entrée pour la conception d'une pièce et des moyens d'affichage pour afficher l'espace de montage (boîte BR) de la pièce à concevoir, de l'environnement d'espace de montage et des pièces, et au moins une base de données centrale (F) qui est reliée par le biais d'une liaison de données (PDC) avec l'au moins un système de xAO (X, Y, Z) en vue de l'échange de données, dispose d'un accès aux pièces existantes d'au moins une unité de conception et présente des moyens de sélection pour sélectionner les pièces existantes de l'unité de conception qui elles-mêmes ou dont les espaces de montage (boîte BRU) chevauchent l'espace de montage (boîte BR) de la pièce à concevoir ou sont limitrophes de celui-ci, ainsi que des moyens de transmission pour transmettre au système de xAO (X, Y, Z) des informations définissant les pièces existantes sélectionnées avec leur position relative par rapport à l'espace de montage (boîte BR) de la nouvelle pièce à concevoir sous la forme d'un environnement d'espace de montage, **caractérisé en ce que** les moyens de transmission de la base de données centrale (F) sont en plus configurés pour transmettre au système de xAO (X, Y, Z) les espaces de montage (boîte BRU) des pièces existantes et pour transmettre par portions ou entièrement les pièces existantes sélectionnées ; et que l'au moins un système de xAO (X, Y, Z) présente en plus des moyens d'entrée pour déterminer l'espace de montage (boîte BR) pour la pièce à concevoir, des moyens de sélection pour sélectionner et/ou adapter la taille des espaces de montage (boîte BRU) des pièces existantes transmis par la base de données centrale (F), des moyens de transmission pour transmettre l'espace de montage (boîte BR) défini et des espaces de montage (boîte BRU) sélectionnés et/ou dont la taille est adaptée, des pièces existantes à la base de données centrale (F), et des moyens d'affichage pour afficher par portions ou entièrement les pièces existantes sélectionnées.

2. Système de conception selon la revendication 1, **caractérisé en ce que** la base de données centrale (F) présente des moyens de mémorisation pour une pièce terminée conçue avec le système de xAO (X, Y, Z) ainsi que la boîte de son espace de montage et sa position de montage.

3. Système de conception selon l'une des revendications précédentes, **caractérisé en ce que** le système de xAO (X) présente des moyens pour mémoriser un environnement d'espace de montage pour une pièce à concevoir.

4. Système de conception selon l'une des revendications précédentes, **caractérisé en ce que** le système de xAO (X) présente des moyens de mémorisation pour mémoriser les données de gestion relatives aux pièces de l'environnement d'espace de montage, lesquelles peuvent être mises à la disposition de l'utilisateur, notamment sous la forme d'un tableau de gestion, les données de gestion pouvant notamment comprendre un numéro courant, un numéro de pièce, un numéro de version, une désignation, un état « nouveau » ou « modifié » ainsi qu'une remarque pour chaque pièce de l'environnement d'espace de montage.

5. Système de conception selon l'une des revendications précédentes, **caractérisé en ce que** le système de xAO (X) présente une structure de réception pour les données d'environnement d'espace de montage associées à une pièce, un fichier (7) contenant les données de la pièce à concevoir étant associé à un marqueur d'environnement d'espace de montage destiné à indiquer si un environnement d'espace de montage est enregistré pour la pièce et le nom étant associé à un fichier de réception de l'environnement d'espace de montage (8), le fichier de réception de l'environnement d'espace de montage (8) présentant le nom d'un fichier (10) avec un tableau de gestion, lequel contient les données de gestion relatives aux pièces de l'environnement d'espace de montage, présentant la définition de l'espace de montage de la pièce à concevoir, une liste des espaces de montage (boîte BRU) des pièces de l'environnement d'espace de montage ainsi que le nom du fichier (11) d'un ensemble d'environnement d'espace de montage, et l'ensemble d'environnement d'espace de montage comprenant de son côté les données des pièces de l'environnement d'espace de montage dans le format utilisé par le système de xAO (X).

6. Système de conception selon l'une des revendications précédentes, **caractérisé par** une pluralité de systèmes de xAO (X, Y, Z) qui sont reliés avec l'au moins une base de données centrale (F) par le biais d'une liaison de données (PDC).

7. Système de conception selon l'une des revendications précédentes, **caractérisé par** une pluralité de bases de données centrales qui sont reliées à l'au moins un système de xAO (X, Y, Z) par le biais d'une liaison de données (PDC), une base de données centrale (F) donnée pouvant être sélectionnée par le biais du système de xAO (X, Y, Z) utilisé pour la pièce à concevoir.

8. Système de conception selon l'une des revendications précédentes, **caractérisé en ce que** la liaison de données entre l'au moins un système de xAO (X, Y, Z) et l'au moins une base de données centrale (F) s'effectue par le biais d'un canal de données de produit (PDC) qui est à chaque fois relié au système de xAO (X, Y, Z) et à la base de données centrale (F) par le biais d'un adaptateur (A-X, A-Y, A-Z, A-F) et d'une interface de programmation d'application (API).

9. Système de conception selon l'une des revendications précédentes, **caractérisé en ce que** les unités de conception sont des véhicules automobiles.

10. Procédé pour la conception ou le développement de nouvelles pièces d'une unité de conception dans le contexte d'un environnement d'espace de montage composé de pièces existantes de l'unité de conception au moyen d'un système de conception comprenant au moins un système de xAO (X, Y, Z) et au moins une base de données centrale (F) qui sont reliés entre eux par le biais d'une liaison de données (PDC), avec lequel la base de données centrale (F) sert à déterminer les pièces existantes de l'unité de conception qui elles-mêmes ou dont les espaces de montage (boîte BRU) chevauchent l'espace de montage (boîte BR) de la pièce à concevoir ou sont limitrophes de celui-ci et sert à transmettre au système de xAO (X, Y, Z) des informations définissant leur position relative par rapport à l'espace de montage de la pièce à concevoir ; et dans le système de xAO (X, Y, Z) les pièces existantes déterminées sont indiquées dans la position relative correcte par rapport à l'espace de montage (boîte BR) de la pièce à concevoir sous la forme d'un environnement d'espace de montage pour la conception de la pièce à concevoir dans l'espace de montage (boîte BR), **caractérisé en ce que** l'espace de montage (boîte BR) pour la pièce à concevoir est tout d'abord défini par un utilisateur dans le système de xAO (X, Y, Z) et transmis à la base de données centrale (F) ; que les espaces de montage (boîte BRU) des pièces existantes qui se chevauchent avec l'espace de montage (boîte BR) de la pièce à concevoir ou sont limitrophes de celui-ci sont déterminés dans la base de données centrale (F) et sont transmis au système de xAO ; qu'un espace de montage (boîte BRU) des pièces existantes sélectionné dans le système de xAO (X, Y, Z) par un utilisateur et/ou dont la taille est adaptée sont de nouveau transmis à la base de données centrale (F) ; et que les pièces correspondant aux espaces de montage (boîte BRU) sélectionnés sont ensuite seulement transmises par portions ou entièrement en fonction de l'adaptation de leur taille de la base de données centrale (F) vers le système de xAO (X, Y, Z).

11. Procédé selon la revendication 10, **caractérisé en ce que** l'environnement d'espace de montage peut être affiché ou masqué pendant la conception de la nouvelle pièce à concevoir en fonction des saisies de l'utilisateur.

12. Procédé selon la revendication 10 ou 11, **caractérisé en ce que** l'environnement d'espace de montage pour une pièce en cours de conception peut être enregistré conjointement.

13. Procédé selon l'une des revendications 10 à 12, **caractérisé en ce que** l'environnement d'espace de montage peut être actualisé au cours de la conception de la nouvelle pièce à concevoir.

14. Procédé selon la revendication 13, **caractérisé en ce que** lors d'une actualisation de l'environnement d'espace de montage, seules les pièces modifiées sont de nouveau transmises par la base de données centrale (F) au système de xAO (X, Y, Z) sollicité puis mises à jour.

15. Procédé selon l'une des revendications 10 à 14, **caractérisé en ce que** la base de données centrale (F) possède un accès aux pièces de différents véhicules et que l'environnement d'espace de montage d'un véhicule donné peut être consulté pour la conception d'une nouvelle pièce.

16. Procédé selon l'une des revendications 10 à 15, **caractérisé en ce que** la représentation de l'espace de montage et de l'environnement d'espace de montage dans le système de xAO (X, Y, Z) utilisé pour la conception s'effectue dans un système de coordonnées d'espace de montage et la détermination des pièces concernées ou des espaces de montage des pièces concernées (boîte BRU) dans la base de données centrale (F) s'effectue dans un système de coordonnées d'unité de conception, les espaces de montage (boîte BR, boîte BRU) transmis par un système de xAO (X, Y, Z) à la base de données centrale (F) pour la détermination des pièces existantes concernées étant transformés du système de coordonnées de l'espace de montage vers le système de coordonnées de l'unité de conception et les pièces ou les boîtes de l'environnement d'espace de montage qui sont transmises de la base de données centrale (F) à un système de xAO (X, Y, Z) étant transformées du système de coordonnées de l'unité de conception vers le système de coordonnées de l'espace de montage.

17. Procédé selon l'une des revendications 10 à 16, **caractérisé en ce qu'**une conversion des données reçues sur l'environnement d'espace de montage vers le format utilisé par le système de xAO (X, Y, Z) avec lequel doit être conçue la nouvelle pièce est effectuée dans ce système de xAO (X, Y, Z) lorsque les pièces existantes de l'environnement d'espace de montage étaient stockées dans un autre format.

18. Procédé selon l'une des revendications 10 à 17, **caractérisé en ce que** le système de xAO (X, Y, Z) mémorise temporairement des données destinées à la gestion des pièces de l'environnement d'espace de montage telles que le numéro de pièce, le numéro de version et la désignation et les met à la disposition de l'utilisateur.

19. Procédé selon l'une des revendications 10 à 18, **caractérisé en ce que** dans le cas de plusieurs bases de données centrales, une base de données centrale (F) sélectionnée par l'utilisateur est utilisée pour déterminer l'environnement d'espace de montage.

20. Procédé selon l'une des revendications 10 à 19, **caractérisé en ce que** la pièce conçue terminée est mise à la disposition de la base de données centrale (F) sous la forme d'un composant possible des environnements d'espace de montage sollicités par la suite.
